# EUROPEAN PATENT APPLICATION

(11) **EP 1 944 136 A1**
(43) Date of publication of application: **16.07.2008**
(21) Application number: 07100556.5
(22) Date of filing: 15.01.2007
(51) Int. Cl.: B25J 9/10, F16H 57/02, F16H 55/18, B25J 9/00

(54) **Method of adjusting backlash between a pinion and a gear during assembly of a wrist of an industrial robot and corrsponding wrist unit**

(71) Applicant: ABB Technology AB, 721 83 Västerås (SE)
(72) Inventor: Larsson, Jan, 724 78 Västerås (SE)
(74) Representative: Reyier, Ann-Mari

(57) **Abstract**

A method for the assembly of a first part (1) to a second part (2) of a manipulator, wherein the first part has a first interface surface (8) and the end of the second part has a second interface surface (9), which first and second interface surfaces (8, 9) after the assembly forms an interface (3) between said first part and said second part, wherein at least one of said interface surfaces (8, 9) is provided with a guide member (34) about which the other part is rotatable, joining said first part (1) and said second part (2) such that said first interface surface (8) and said second interface surface (9) are positioned to be compatible to each other, rotating said first part (1) about said guide member (34) until a gearwheel (25) of the first part (1) fully meshes a pinion (15) of the second part (2) and fastening the first part (1) firmly to said second part (2) by means for fastening (10).

## Description

### TECHNICAL FIELD

The invention relates to a method for the assembly of a wrist unit of a manipulator of an industrial robot.

### BACKGROUND OF THE INVENTION

On assembly of a manipulator of an industrial robot, the mounting of a wrist unit is a critical and time consuming point.

According to prior art, the assembly of a wrist unit attached to the upper arm of a manipulator is, as an example, performed by use of two guide pins, wherein said guide pins are guiding the movement of a first part in the direction towards a second part during the assembly. Said guide pins are guiding the first part and the second part, such that teeth of first and second gearwheels of the two parts, to mesh in correctly, are moved axially and in a parallel motion towards each other.

To eliminate a risk of squeezing, the tolerance with respect to the distance between the two gearwheels is set rather high. As a result a backlash arises between the two gearwheels. Said backlash can under certain circumstances become rather high, which causes disturbances during the running of the manipulator. As an example, the outer part of the wrist unit can start to wobble if the axes of the first and second gearwheels are not exactly linearly arranged in relation to each other. The backlash can sometimes become unacceptably great.

Due to the complicated structure of the wrist unit it has to be sent back to a supplier to be disassembled for service at certain occasions, e.g. at such an uncomplicated measure as a renewal of a gasket.

Consequently, there is a need of an "easy to assemble" version of a wrist of a manipulator.

### SUMMARY OF THE INVENTION

It is one object of the present invention to find a solution to drawbacks of the described prior art. Such an object of the invention is to provide a wrist unit, which is easy to assemble at high precision. A further object of the invention is to provide a wrist unit of a simple structure. Still another object of the invention is to provide a wrist unit of a structure enabling the wrist unit to be mounted by an industrial robot.

One aspect of the invention to provide a simple method for the assembly of a first and second part of a wrist unit housing a gear is characterized according to the independent method claim 1.

Further embodiments and advantageous features of the invention are presented in the dependent claims.

The solution to the problem related to the prior art methods for assembly is to provide a method for eliminating, or heavily reducing, the backlash arising at a gear between a first part and a second part of a wrist unit of a manipulator on assembly of said first part and said second part to form the wrist unit mounted at the end of an upper arm of a manipulator.

Said method for the assembly of a first part to a second part of the wrist unit, wherein the first part has a first interface surface and the end of the second part has a second interface surface, which first and second interface surfaces after the assembly forms an interface between said first part and said second part of the wrist unit, the first part being provided with a gearwheel rotatable about a first symmetry axis and the end of the second part further being provided with a pinion rotatable about a second symmetry axis, the method comprising:
- providing at least one of said interface surfaces with a guide member, about which the first part is rotatable in parallel relation to said second symmetry axis,
- joining said first part and said second part of the manipulator arm such that said first interface surface and said second interface surface are positioned to be compatible to each other,
- rotating the first part about said guide member until the gearwheel fully meshes the pinion,
- fastening the first part firmly to said second part by means for fastening.
One advantage achieved by the described method is that the final fitting of the gearwheel in relation to the at the end of the second part is that the centre of the gearwheel is enabled to perform a pendular movement about the guide member and thus trends to swing about the guide member by its own weight or by applied pressure until it abuts the pinion and fully meshes the pinion without, or almost without, backlash.

Further embodiments and advantageous features of the invention are presented in the dependent claims.

### BRIEF DESCRIPTION OF THE DRAWINGS

Fig. 1 shows a perspective view of a wrist unit of an industrial robot manipulator attached to a manipulator arm in the background
Fig. 2 shows a front view illustrating the wrist unit from the front, wherein the first and second parts of the wrist unit are attached to each other.
Fig. 3 shows a cross section through a front end of the second part and the attached first part of the wrist unit joined at an interface.
Fig. 4 shows an upper end of a manipulator arm of an industrial robot provided with a wrist according to the invention.

### DESCRIPTION OF EMBODIMENTS

Below the invention will be explained in greater detail by description of embodiments with reference to the accompanying drawings.

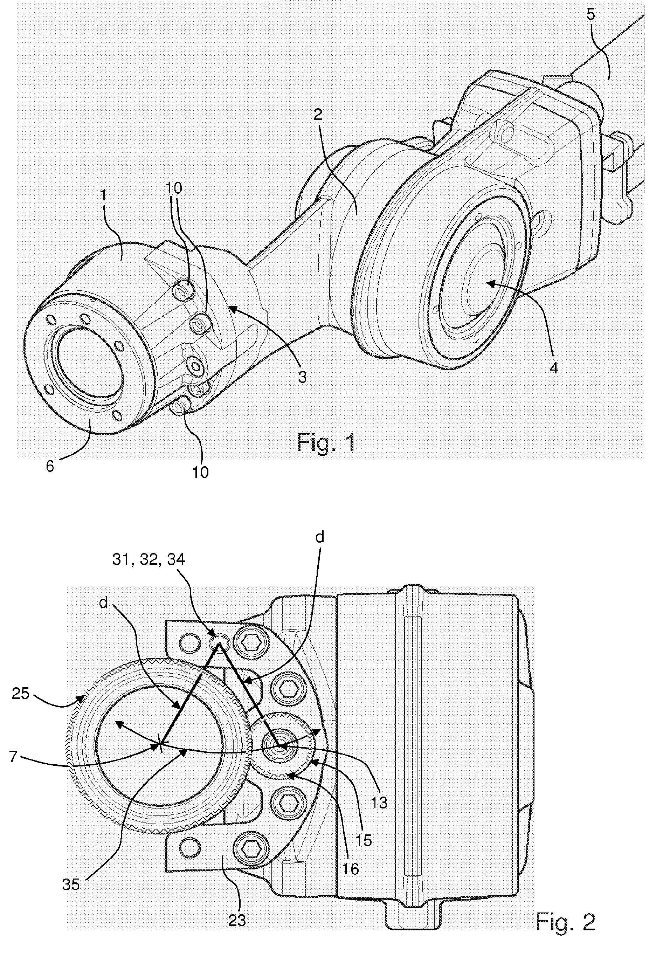

With reference to figure 1 the relevant parts of a manipulator in relation to the invention is shown in a perspective view. A first part of a wrist unit is denoted 1, in the figure attached to a second part 2 of the wrist unit. The first part 1 and the end of the first part 2 of the wrist unit are joined at an interface 3. The wrist unit shown here further illustrates that the second part 2 of the wrist unit can perform rotational movements about a tilt axle 4 arranged in the wrist. In the background the end of the upper arm 5 of the manipulator can be seen.

The first part 1 of the wrist unit is provided with a turning disc 6 at the front. Said turning disc 6 is turning about an axis 7 arranged in parallel to the upper arm 2, whereupon the turning disc 6 is rotatable about said axis 7. The axis 7 is herein referred to as the first symmetry axis of the wrist unit 1. The turning disc 6 is prepared for receiving different tools for use at work with the manipulator, whereby said tools can be rotated by means of rotating said turning disc 6.

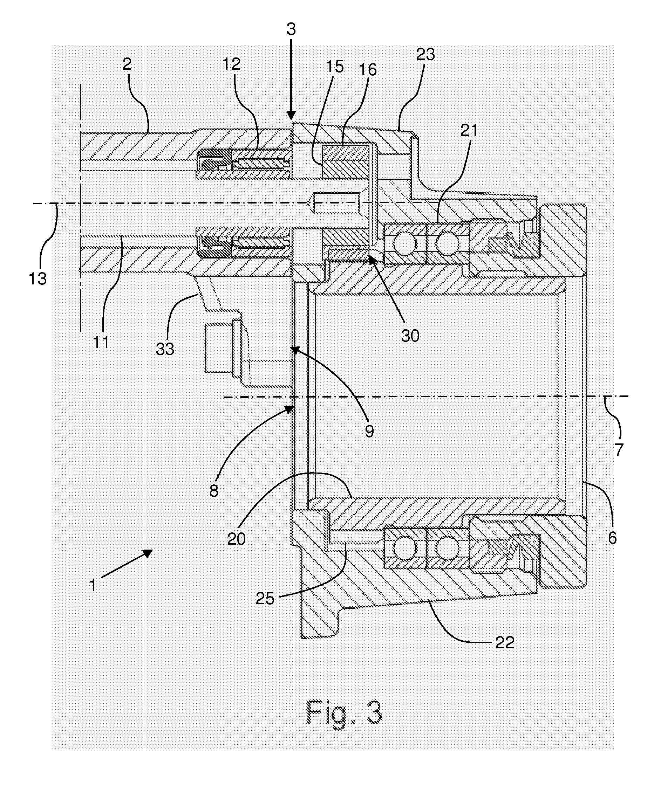

The first part 1 of the wrist unit is attached to the end of the second part 2 at the interface 3, wherein the first part 1 has a first interface surface 8 (indicated in fig. 3) and the end of the second part 2 has a second interface surface 9 (indicated in fig. 3). Said first 8 and second 9 interface surfaces are designed to be compatible to each other and enabled to receive each other. The joint at the interface 3 is arranged by means for fastening 10, which in figures 1 and 2 are represented by screws holding the first part 1 firmly to the end of the second part 2. Other means for fastening could be bolts or locking pins.

In figure 3 the connection between the second part 2 and the first part 1 will be described more in detail by means of a cross section view. The second part 2 has an axle 11 journalled in a first bearing 12 at the end of said second part 2. Said axle 11 protrudes from the second interface surface 9 with a protruding piece. The protruding piece is provided with a pinion 15 having pinion teeth 16 at its circumference. The axle 11 is the drive axle for the rotational movements of the turning disc 6, as will be shown below. The axle 11 rotates around its symmetry axis, herein referred to as the second symmetry axis 13.

The turning disc 6 is attached to a shaft 20 of the first part 1 being journalled in a second bearing 21 mounted inside the housing 22 of first part 1. This implies that said first part shaft 20 rotates around previously mentioned symmetry axis 7. At a side of the housing 22 the wrist unit is provided with a flange 23, which has a recess for receiving the pinion 15 of axle 11 of the second part 2. The housing 22 together with the associated flange 23 ends up in the first interface surface 8 arranged to be compatible to and face the second interface surface 9 of the end of the second part 2.

The shaft 20 of the first part 1 is at least along a longitudinal part performed as a gearwheel 25 provided with gearwheel teeth along its outer circumference. When the first part 1 and the second part 2 are mounted together along the interface surfaces 8, 9 the purpose of the arrangement is to see to that the pinion 15 and the gearwheel 25 mesh each other with the smallest backlash as possible. This is illustrated in figure 3, wherein at the point referred to as 30 the teeth 16 of the pinion 15 are dashed and the teeth of the gearwheel 25 are without dashing.

According to an aspect of the invention the assembly of the first part 1 to the end of the second part 2 is performed according to the following recited steps.

The first interface surface 8 is provided with a first bore 31, the centre axis of which arranged to be positioned at a specific distance d to said first symmetry axis 7. This first bore 31 is only depicted in figure 2. In fact, in the real version this first bore will not be visible at all as the first bore 31 preferably is not a through bore, but a bore with a limited drill hole depth, whereby it will not be visible from the outside of flange 23.

The second interface surface 9 is provided with a corresponding second bore 32, the centre of which arranged to be positioned at the same said specific distance d to said second symmetry axis 13. Said second bore 32 is only depicted in figure 2 (at the same position as bore 31). In fact, in the real version this second bore 32 will not be visible at all in this front view as the first bore 31 preferably is not a through bore, but a bore with a limited drill hole depth, whereby it will not be visible from the outside of flange 23. The second bore 32 will also not be a through bore, but a bore with a limited drill hole depth, whereby it will not be visible from the outside of the casing 33 of the end of the second part 2.

Preferably, the distance d from the guide pin 34 to the first symmetry axis 7 and to the second symmetry axis 13 are equal if a high tolerance should be achieved in relation to the relative position of the pinion 15 and the gearwheel 25. Of cause, it is not necessary that said distances are exactly the same, if a high tolerance is not an absolute request.

On the assembly of the first part 1 to the end of the second part 2, a guide pin 34, previously referred to as a guide member in general, is inserted into either one of the first 31 and second 32 bores. The guide pin 34 is indicated in fig. 2 in the same position as that of bores 31 and 32, as the guide pin 34 will be inserted in one of these bores. After the insertion of the guide pin 34 into one of the bores 31, 32, the first part 1 is held in a position in front of the second interface surface 9 of the end of the second part 2, such that the first interface surface 8 faces said second interface surface 9 and turned in space so that the interface surfaces 8, 9 are compatibly arranged in relation to each other. The first part 1 is now displaced such that the first part 1 and the end of the second part 2 approaches each other in a direction where the symmetry axes 7 and 13 are kept substantially in parallel relation to each other. When the first part 1 and the end of the second part 2 are coming closer it is seen to that the pinion 15 is received into said recess of the flange 23 and in a way that the teeth 16 of the pinion 15 and the gearwheel 25 cut gears to each other. When the first 8 and second 9 interface surfaces contact each other they are loosely attached to each other by means of screws 10 or similar means for fastening. The holes made in the flange 23 around the screws are made with some play, so that it will be possible to adjust the position of the first part 1 a little in relation to the end of the second part 2. This adjustment may be performed with the first symmetry axis 7 describing a path along a curve 35 having a radius d emerging from a centre of the guide pin 34. The curve 35 intersects, preferably, the symmetry axis 13, which is also the centre of the pinion 15. This arrangement allows the first part 1 to swing by its own weight or by means of applied pressure such that the gearwheel 25 of the first part 1 and the pinion 15 of second part 2 completely mesh each other with a minimum tolerance. When said complete meshing with said minimum tolerance is kept, the screws 10, or equal means for fastening, are firmly tightened with a predetermined torque applied. By use of the method described it is possible to position the pinion 15 and the gearwheel 25 in relation to each other with a tolerance within hundredths of millimeters.

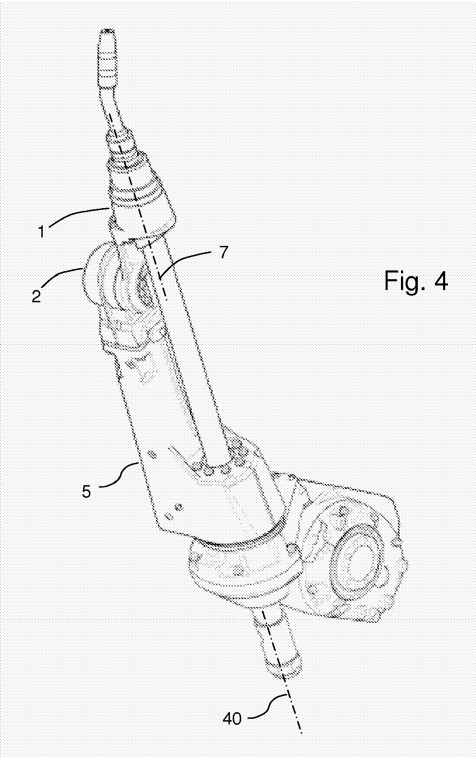

Fig. 4 is an overview of an arm of a manipulator of an industrial robot, in this case an industrial robot for welding, wherein the first part 1 and the second part 2 of the wrist unit are illustrated and mounted to the upper arm 5 of the manipulator. The wrist unit 1, 2 is attached to the upper arm 5, which is rotatably arranged about an axis 40. By use of the method as described in the present invention, a backlash in the gear comprising pinion 15 and gearwheel 25 is reduced, whereby the axes 40 and 7 are kept aligned during movements of the different parts of the manipulator arm. If said axes 40 and 7 are not correctly aligned the first part 1 of the wrist unit can start to wobble.

In the figures the pinion 15 is depicted as smaller in relation to gearwheel 25. This is only an example, the pinion 15 can as well be larger or of the same size as the gearwheel 25.

### DEFINITION

The term pinion is herein used meaning the same as a gearwheel. The pinion and the gearwheel mentioned herein may have inclined or straight spur gears.

The term "compatible" used as in the description of the first (8) and second (9) surfaces means that said surfaces must be designed to be able to receive each other with a good fitting.

## Claims

1. A method for assembly of a first part (1) to a second part (2) of a manipulator (5), wherein the first part (1) has a first interface surface (8) and the second part has a second interface surface (9), which first and second interface surfaces (8, 9) after the assembly forms an interface (3) between said first part (1) and said second part (2), the second part (2) further being provided with a pinion (15) rotatable about a first symmetry axis (13) and the second part (2) being provided with a gearwheel (25) rotatable about a second symmetry axis (7), the method comprising:
- providing at least one of said interface surfaces (8, 9) with a guide member (34), about which the first part (1) is rotatable in parallel relation to said second symmetry axis,
- joining said first part (1) and said second part (2) of the manipulator such that said first interface surface (8) and said second interface surface (9) being compatible to each other,
- rotating the first part (1) about said guide member (34) until the gearwheel (25) fully meshes the pinion (15),
- fastening the first part (1) firmly to said second part (2) by means for fastening (10).

2. The method according to claim 1, further comprising the steps of:
- providing the first interface surface (8) with a first bore (31), the centre axis of which arranged to be positioned at a specific distance (d) to said first symmetry axis (7),
- providing the second interface surface (9) with a corresponding second bore (32), the centre of which arranged to be positioned at the same said specific distance (d) to said second symmetry axis (13),
- inserting as said guide member (34) a guide pin in any one of said first (31) and said second (32) bores,
- joining said first part (1) and said second part (2) such that said first interface surface (8) and said second interface surface (9) are arranged compatible to each other and that said first bore (31) and said second bore (32) with close running fit encircles the guide pin.

3. The method according to claim 1 or 2, wherein said first (1) and said second (2) parts are members of a wrist unit of said manipulator (5).

4. The method according to claim 1 or 2, wherein said first (8) and said second (9) interface surfaces are arranged perpendicular to the second symmetry axis (13).

5. A wrist unit of a manipulator, comprising a first part (1) attached to a second part (2), **characterized in that** the first part (1) has a first interface surface (8) and the second part has a second interface surface (9), which form an interface (3) between said first part (1) and said second part (2), the second part (2) further being provided with a pinion (15) rotatable about a first symmetry axis (13) and the second part (2) being provided with a gearwheel (25) rotatable about a second symmetry axis (7), said pinion and said gearwheel meshing each other, wherein said wrist unit has a single guide member (34) at said interface (3) for guiding said first (8) and said second (9) interface surfaces during assembly of the wrist unit.

6. The wrist unit according to claim 5, wherein said single guide member (34) is a guide pin.
